# EUROPÄISCHE PATENTANMELDUNG

(11) **EP 1 172 166 A1**
(43) Veröffentlichungstag der Anmeldung: **16.01.2002**
(21) Anmeldenummer: 01103898.1
(22) Anmeldetag: 16.02.2001
(51) Int. Cl.: B23C 5/08, B27G 13/00

(54) **Mehrteiliges Fräswerkzeug und Fräsverfahren**

(30) Priorität: 14.07.2000 DE 20012247 U
(71) Anmelder: Ledermann GmbH, 72160 Horb am Neckar (DE)
(72) Erfinder: Katz, Otto, 72160 Horb am Neckar (DE)
(74) Vertreter: HOFFMANN - EITLE

(57) **Zusammenfassung**

Die Erfindung betrifft ein mehrteiliges Fräswerkzeug zum Profilieren von Werkstücken, insbesondere zur Herstellung von Nut und Feder, und zum Fügen von Stirnseiten von plattenförmigen Werkstücken aus Holz und/oder Holzwerkstoffen, umfassend: eine Spannbuchse (1), auf der ein Werkzeugsatz mit mindestens drei drehfest und axial übereinander angeordneten Einzelwerkzeugen (2, 3, 4) montiert ist, von denen ein Einzelwerkzeug (3) ein ortsfest mit der Spannbuchse (1) verbundenes Referenzwerkzeug (3) ist, relativ zu dem die jeweils mindestens zwei anderen Einzelwerkzeuge (2, 4) unabhängig voneinander axial auf der Spannbuchse (1) verschiebbar sind. Ferner betrifft die Erfindung ein Verfahren zum Fräsen von Werkstücken mittels eines solchen Fräswerkzeugs.

## Beschreibung

### TECHNISCHES GEBIET

Die Erfindung betrifft ein mehrteiliges Fräswerkzeug beziehungsweise einen mehrteiligen Fräswerkzeugsatz zum Profilieren von Werkstücken, insbesondere zur Herstellung von Nut und Feder und zum Fügen von Stirnseiten von plattenförmigen Werkstücken aus Holz und/oder Holzwerkstoffen. Ferner betrifft die Erfindung ein Verfahren zum Fräsen von Werkstücken mittels eines solchen Fräswerkzeugs.

### STAND DER TECHNIK

Derartige Fräswerkzeuge beziehungsweise Werkzeugsätze werden insbesondere auch zur Bearbeitung der Stirnseiten von Holzwerkstoffplatten verwendet, die zumindest teilweise mit einer verschleißfesten Deckschicht versehen sind. Auch hier werden die Stirnseiten mit Profilen, wie zum Beispiel Nut und Feder, versehen und flächig bearbeitet. Bei derartigen Holzwerkstoffplatten kann es sich beispielsweise um Parkett-oder Laminatfußboden-Paneelen oder dergleichen handeln. Laminatfußboden-Paneelen bestehen im Wesentlichen aus einem Trägerwerkstoff (zum Beispiel eine Spanplatte), auf dem ein Strukturpapier (beispielsweise ein Eichenholzdekor) und eine abriebfeste Deckschicht (Lauffläche) aufgebracht sind. Die Deckschicht kann Al₂O₃ enthalten.

Die Herstellung beziehungsweise Bearbeitung der oben genannten plattenförmigen Werkstücke erfolgt üblicherweise auf Bearbeitungsmaschinen. Diese können Bearbeitungszentren oder Durchlaufanlagen sein.

Unter Bearbeitungszentren werden hier Maschinen verstanden, bei denen das Werkstück stationär auf einem Maschinentisch fixiert ist und bei denen ein Bearbeitungsaggregat die Schnitt- und Vorschubbewegung ausführt. In das Bearbeitungsaggregat werden mit Hilfe eines Werkzeugwechslers nacheinander die für die Bearbeitung bzw. Profilierung benötigten Werkzeuge eingewechselt, und das Werkstück wird in mindestens zwei oder mehreren aufeinanderfolgenden Schritten mit dem jeweiligen Werkzeug bearbeitet. Die Produktivität der Maschine wird somit von der Zerspanzeit, der Anzahl der Werkzeuge sowie deren Einzelzerspanzeiten und von den Werkzeugwechselzeiten bestimmt. Der Werkzeugwechsler muss entsprechend dimensioniert werden und stellt somit ebenfalls ein Kostenfaktor dar.

Von Durchlaufanlagen wird gesprochen, wenn das Werkstück mittels einer Transportkette oder dergleichen an den einzelnen für die Bearbeitung bzw. Profilierung erforderlichen Bearbeitungsaggregaten, sprich Werkzeugen, vorbeigeführt wird. Das Werkstückes wird also in mehreren aufeinanderfolgenden Arbeitsschritten im Durchlauf bearbeitet.

Unabhängig davon, ob ein Bearbeitungszentrum oder eine Durchlaufanlage zur Anwendung kommt, werden bei der Bearbeitung eines Werkstückes, beispielsweise beim Profilieren der Stirnflächen zur Herstellung von Nut und Feder, gegenwärtig mehrere aufeinanderfolgende Arbeitsschritte durchgeführt. Im ersten Arbeitsschritt wird zum Beispiel die Nut bzw. Feder angebracht, und in nachfolgenden Arbeitsschritten wird die Bearbeitung der verbleibenden, unbearbeiteten Stirnfläche vorgenommen.

Die Beschaffungskosten für die jeweilige Bearbeitungsmaschine werden somit von der Anzahl der erforderlichen Bearbeitungsaggregate bestimmt. Die Produktivität hängt im starken Maße von den Nebenzeiten, das heißt der Summe der Werkzeugwechselzeiten ab.

Normale Parkett- oder Laminatfußboden-Paneelen, die auf Durchlaufanlagen produziert werden, haben üblicherweise eine langgestreckte Form und eine Abmessung von ca. 200 mm x 1250 mm und werden sowohl in ihrer Längsrichtung hintereinander als auch seitlich versetzt nebeneinander zu einem Gesamtverbund, das heißt einer geschlossenen begehbaren Bodenfläche zusammengefügt. Zwischenzeitlich sind jedoch auch kleinere Paneelen-Elemente bzw. Dekorelemente in Fertigung, die zwischen diese normalen Paneelen eingefügt werden. Diese kleineren Paneelen-Elemente können eine quadratische, sechs-oder achteckige Grundform besitzen und im Übrigen auch unabhängig von den normalen, langgestreckten Paneelen verwendet und mosaikartig zu einem Gesamtverbund zusammengefügt werden. Kleine quadratische Elemente weisen zum Beispiel eine Kantenlänge von ca. 500 mm auf. Insbesondere bei diesen kleineren Paneelen-Elementen mit kurzen Kantenlängen treten bei der Fertigung in Durchlaufanlagen Winkelfehler auf, die aus dem Werkstücktransport zwischen den einzelnen Bearbeitungsstationen resultieren. Diese Winkelfehler führen beim Verlegen zu Ungenauigkeiten in der Abmessung und zu einem Verlaufen des Gesamtverbundes.

Um eine exakte Winkelgenauigkeit zu erreichen, werden die kleineren Paneelen-Elemente beziehungsweise Dekorelemente deshalb stationär auf Bearbeitungszentren gefertigt. Wie schon weiter oben beschrieben, ist hierbei die Bearbeitung in mehreren Schritten durchzuführen.

Die DE 297 11 184 U1 offenbart ein mehrteiliges, verstellbares Werkzeug zur Herstellung einer Nut. Das Werkzeug ist auf einem Hydro-Spannelement montiert und weist zwei mit Schneiden versehene Werkzeughälften auf. Die beiden Werkzeughälften besitzen Grundkörper, auf denen Schneidplatten aufgelötet sind. Eine Werkzeughälfte ist fest mit dem Hydro-Spannelement verbunden. Die andere Werkzeughälfte ist mittels einer Einstelleinrichtung auf dem Hydro-Spannelement verschiebbar. Diese bewegliche Werkzeughälfte wird mit Hilfe eines Federpaketes gegen die Einstelleinrichtung gedrückt. Durch die Verschiebbarkeit der beweglichen Werkzeughälfte kann eine gewünschte Nutbreite festgelegt werden. Ein Nachteil dieser Konstruktion ist jedoch in dem Federpaket zu sehen. In der Praxis hat es sich nämlich gezeigt, dass am Federpaket und an einer Außenfläche des Hydro-Spannelementes Ablagerungen in Form von Holzstaub und Bindemitteln entstehen, und die Federkraft dann nicht mehr zum Verschieben der Werkzeughälfte ausreicht, beziehungsweise sich die Werkzeughälften verklemmen. Das zuvor erläuterte mehrteilige Werkzeug ist nicht zur Bearbeitung einer Stirnfläche eines Werkstücks vorgesehen. Die Stirnfläche bleibt also unbearbeitet und muss daher in weiteren Arbeitsgängen fertigbearbeitet werden.

Aus der Druckschrift DE 297 07 286 U1 der Anmelderin geht ein mehrteiliges Fräswerkzeug (Füge-Werkzeug) hervor, das auf einer Hydro-Spannbüchse gelagert ist und zwei mit Schneiden versehene Werkzeughälften besitzt, die im Bereich ihrer Außendurchmesser ineinander greifen. Dieses Werkzeug dient zum Bearbeiten einer bereits mit einer Nut versehenen Stirnfläche eines aus einem Holzwerkstoff gefertigten plattenförmigen Werkstückes, welches mit einer harten, verschleißfesten Deckschicht ausgestattet ist. Die erste Werkzeughälfte ist fest mit der Hydro-Spannbüchse verbunden, während die zweite Werkzeughälfte auf der Hydro-Spannbüchse verschiebbar ist. Die verschiebbare zweite Werkzeughälfte ist an ihrem Umfang mit Schneiden versehen, welche die harte Deckschicht und die weichere Zwischenschicht bis zur Nut hin bearbeiten. Sind die Schneiden im Kontaktbereich zur Deckschicht verschlissen, wird die zweite Werkzeughälfte auf der Hydro-Spannbüchse soweit verschoben, bis ein neuer Schneidenabschnitt zum Eingriff kommt. Die mit der Hydro-Spannbüchse fest verbundene erste Werkzeughälfte ist an ihrem Umfang mit Schneiden versehen, welche im Betrieb des Werkzeugs die harte Deckschicht minimal anfasen.

Die DE-OS 23 48 731 der Anmelderin offenbart ein mehrteiliges Kanten-Bearbeitungswerkzeug mit zwei benachbarten, in Richtung einer Werkzeugachse mit ihren Arbeitszonen sich übergreifenden, an einem Werkzeugträger angeordneten Einzelwerkzeugen. Der Werkzeugträger wiederum ist an einer Arbeitsspindel anzubringen. Von den zwei Einzelwerkzeugen ist mindestens eines an einer Führung des Werkzeugträgers in Richtung der Werkzeugachse mittels eines in ein Gegenglied eingreifenden Stellgliedes verstellbar gelagert. Das Stellglied ist durch mindestens eine von der Werkzeugachse beabstandete Stellspindel ausgebildet.

Überdies ist aus der DE 2 315 719 C2 der Anmelderin ein mehrteiliges Fräswerkzeug zum spanabhebenden Bearbeiten der Kanten von über ihre Dicke unterschiedlichen Werkzeugverschleiß-verursachenden Werkstückplatten, wie beispielsweise kunststoffbeschichteten Spanplatten oder dergleichen, bekannt. Das Fräswerkzeug besitzt ein auf einer Werkzeugspindel angeordnetes Rotationswerkzeug, das mehrere, nämlich zwei axial nebeneinanderliegende Einzelwerkzeuge aufweist, die jeweils mit Schneidelementen bestückt sind, die in unterschiedliche axiale Arbeitsstellungen verstellbar sind und in der jeweiligen Arbeitsstellung im Wesentlichen spielfrei gegenüber der Werkzeugspindel gesichert sind. Die zwei Einzelwerkzeuge sind axial unverschieblich auf jeweils mindestens einer Traghülse angeordnet. Jede Traghülse ist verschiebbar auf der Werkzeugspindel gelagert. Damit die axiale Lage der Einzelwerkzeuge während eines Bearbeitungsvorgangs bei laufendem Werkzeug verstellt werden kann, ist jede Traghülse über eine in Axialrichtung der Werkzeugspindel bewegbare Lagerung mit einer Stelleinrichtung verbunden, die eine Verstelleinrichtung aufweist. Die Traghülsen und damit die beiden Einzelwerkzeuge sind mit Hilfe der Stelleinrichtung auch bei drehender Werkzeugspindel über die bewegbare Lagerung gegenläufig verstellbar.

Die WO 99/00604 offenbart ein mehrteiliges Fräswerkzeug zum Herstellung einer Nut, mit zwei Einzelwerkzeugen, die drehfest und axial übereinander beziehungsweise nebeneinander liegend an einer mit einer Antriebswelle korrespondierenden Spannvorrichtung befestigt sind. Die Einzelwerkzeuge werden jeweils von einem Werkzeugträger gebildet, der an seinen radialen Randbereichen mit Werkzeugschneiden bestückt ist. Die Einzelwerkzeuge bzw. die Werkzeugträger sind zudem derart relativ zueinander angeordnet, dass die Werkzeugschneiden des einen Einzelwerkzeugs in einen Zwischenraum zwischen den benachbarten Werkzeugschneiden des anderen Einzelwerkzeugs eingreifen, so dass sich die Wirkungsbereiche der Werkzeugschneiden beider Einzelwerkzeuge in Richtung der Antriebwelle überlappen. Eines der beiden Einzelwerkzeuge ist vollkommen fest mit der Spannvorrichtung verbunden, während das andere Einzelwerkzeug drehfest, aber über eine Einstelleinrichtung und gegen eine Druckfeder axial verschiebbar auf der Spannvorrichtung angeordnet ist. Aufgrund des zuvor erwähnten Ineinandergreifens der beiden Einzelwerkzeuge sowie der besagten axialen Verschiebbarkeit von einem der beiden Einzelwerkzeuge kann eine axiale Breite eines gemeinsamen wirksamen Schneidenbereichs der Einzelwerkzeuge eingestellt und somit bei Bedarf eine Nutenbreite der herzustellenden Nut variiert werden.

Des Weiteren sind mehrteilige Fräswerkzeuge bzw. Werkzeugsätze bekannt, die eine auf einer Antriebsspindel angeordnete Aufnahmebüchse aufweisen, auf der ein Füge-Werkzeug zur Bearbeitung einer relativ harten, abriebfesten Deckschicht und ein zweiteiliges Profilwerkzeug zur Herstellung von Nut bzw. Feder und zur Teilbearbeitung einer Stirnfläche eines Werkstückes montiert sind. Die Nutbreite und das Abstandsmaß vom Nutwerkzeug zum Füge-Werkzeug wird durch das Einlegen von Distanzscheiben zwischen die betreffenden Einzelwerkzeuge eingestellt. Soll nun das Nutwerkzeug, wie zuvor beschrieben, eingesetzt und die Nutbreite verändert werden, so muss das der gesamte Werkzeugsatz von der Antriebsspindel entfernt und die erforderliche Anzahl von Distanzscheiben entnommen werden. Anschließend muss der Werkzeugsatz wieder auf die Antriebsspindel montiert und ein Musterwerkstück hergestellt werden. Wird hierbei festgestellt, dass die vorgenommene Einstellung nicht optimal ist, muss der Werkzeugsatz entsprechend korrigiert, d. h. nochmals demontiert und Distanzscheiben eingefügt bzw. entnommen werden. Die Korrekturmöglichkeiten hängen hierbei von den Dicken der vorhandenen Distanzscheiben ab. Die zuvor erläuterte Prozedur ist ebenfalls erforderlich, falls der Werkzeugverschleiß ein bestimmtes Ausmaß erreicht und aus diesem Grunde Korrekturen erforderlich werden.

Im vorhergehenden Abschnitt wurde beschrieben, dass das Füge-Werkzeug schrittweise verstellt wird, so dass ein neuer Schneidenbereich zum Eingriff kommt. Dies erfolgt dadurch, dass man die Arbeitsspindel, und somit den gesamten Werkzeugsatz, um diesen Betrag verfährt. Damit das zweiteilige Profilwerkzeug in der ursprünglichen Lage zum Werkstück bleibt, müssen daher die entsprechende Anzahl der zwischen dem Profil- und dem Füge-Werkzeug liegenden Distanzringe entnommen werden. Dies ist nur möglich, wenn der Werkzeugsatz von der Arbeitsspindel genommen wird. Da das Füge-Werkzeug, welches die relativ harte, abriebfeste Deckschicht bearbeitet, einem höheren Verschleiß als die für die Nut bzw. Feder vorgesehenen Profilwerkzeuge unterliegt, muss es häufig nachgestellt werden.

Hieraus ergeben sich bei der Distanzringtechnik sehr lange Rüstzeiten. Ferner muss das gesamte Fräswerkzeug demontiert werden, obwohl die verbleibenden Profilwerkzeuge zumeist noch eine größere Standzeit aufweisen. Sowohl infolge des jeweiligen Werkzeugverschleißes, des damit verbundenen Nachschärfens als auch durch das Umrüsten und die Tatsache, dass die jeweiligen Einzelwerkzeuge des Fräswerkzeugs teilweise zusammenwirken, verändert sich die durch das Fräswerkzeug erzeugte Profilgeometrie. Nach jedem relativ rasch auftretenden Verschleiß des Füge-Werkzeugs beziehungsweise nach jedem Umrüsten ist es deshalb erforderlich, dass gesamte Fräswerkzeug auf eine recht aufwendige und zeitintensive Art und Weise neu einzurichten. Insgesamt ist es bei derartigen Fräswerkzeugen also nicht möglich, die für die Fertigung erforderlichen Maße, insbesondere die Nut- bzw. Federbreite, im Rahmen der an sich verfügbaren Gesamtstandzeit beizubehalten. Die Anzahl der möglichen Nachschärfungen bis zu einem erforderlichen Austausch des gesamten Fräswerkzeuges ist niedrig, und der vorhandene Schneidstoff des Fräswerkzeugs kann nicht optimal ausgenutzt werden.

### DARSTELLUNG DER ERFINDUNG

Ausgehend von dem zuvor geschilderten Stand der Technik liegt der Erfindung daher die Aufgabe beziehungsweise das technische Problem zugrunde, ein mehrteiliges Fräswerkzeug zu schaffen, welches die dem besagten Stand der Technik anhaftenden, oben beschriebenen Nachteile möglichst weitgehend vermeidet und welches es gestattet, ein Werkstück auf effektivere Art und Weise präziser zu bearbeiten. Ein weiterer Teilaspekt dieser Aufgabe ist es, ein adäquates Fräsverfahren zum Bearbeiten von Werkstücken mittels eines solchen Werkzeuges zu schaffen.

Diese Aufgabe wird gelöst durch ein erfindungsgemäßes mehrteiliges Fräswerkzeug mit den Merkmalen des Anspruchs 1.

Das erfindungsgemäße Fräswerkzeug gestattet es auf vorteilhafte Art und Weise, Werkstücke sowohl stationär als auch um Durchlauf effektiv und präzise zu profilieren. Ferner wird durch die erfindungsgemäße Lösung ein Fräswerkzeug oder ein einzelner Werkzeugsatz zur kompletten Bearbeitung von zu profilierenden Flächen, insbesondere Stirnflächen von plattenförmigen Werkstücken, geschaffen. So gestattet es ein einzelnes erfindungsgemäßes Fräswerkzeug beispielsweise, sowohl eine Nut als auch eine Deckschicht eines Werkstückes im Wesentlichen gleichzeitig zu bearbeiten. Selbst eine komplexere Werkstückbearbeitung ist ergo mittels eines einzelnen erfindungsgemäßen Fräswerkzeugs durchführbar. Mit anderen Worten vereinigt das erfindungsgemäße Fräswerkzeug in sich mehrere Bearbeitungsfunktionen, für die bisher mehrere unterschiedliche, aufeinanderfolgend angeordnete oder aber aufeinanderfolgend an das Werkstück herangeführte Bearbeitungsaggregate oder -stationen erforderlich waren. Die Anzahl der für die Bearbeitung des Werkstückes erforderlichen Werkzeuge bzw. Bearbeitungsstationen kann somit auf ein Minimum reduziert werden. Da die Beschaffungskosten für eine Bearbeitungsmaschine primär von der Anzahl der erforderlichen Bearbeitungsaggregate bestimmt werden, führt dieser Umstand allein bereits zu einer nicht unerheblichen Kosteneinsparung.

Auch die Tatsache, dass die mit dem erfindungsgemäßen Fräswerkzeug realisierbare Komplettbearbeitung, die mehrere konventionelle Schritte zusammenfasst, im Wesentlichen gleichzeitig und gewissermaßen an nur einer einzelnen Stelle erfolgt, begünstigt eine hohe Maßgenauigkeit des herzustellenden Profils. Dies ist besonders bei Durchlaufanlagen von großem Nutzen. Hier hat es sich nämlich gezeigt, das bei Verwendung des erfindungsgemäßen Fräswerkzeugs keine Bearbeitungsungenauigkeiten mehr auftreten, die an sich aus den Toleranzen beim Werkstücktransport (zum Beispiel über eine Kettenbahn) zwischen einzelnen konventionellen Bearbeitungsstationen resultieren. Mit dem erfindungsgemäßen Fräswerkzeug lassen sich aus diesem Grund sogar kleinere Paneelen-Elemente mit kurzen Kantenlängen zuverlässig und hochpräzise im Durchlaufverfahren bearbeiten, ohne dass hierbei die bei der Fertigung in Durchlaufanlagen an sich bekannten Winkelfehler auftreten.

Erfindungsgemäß ausgestaltete Fräswerkzeuge können auch in der sogenannten Stationärbearbeitung eingesetzt werden, da die Schmalflächenbearbeitung in einem einzigen Bearbeitungsvorgang mit den oben bereits im Zusammenhang mit der Durchlaufbearbeitung erwähnten Vorteilen durchgeführt werden kann. Aufgrund der Komplettbearbeitung mit nur einem einzigen Werkzeug entfällt zum einen die für einen Werkzeugwechsel und zum anderen die für hintereinandergeschaltete Bearbeitungsvorgänge erforderliche Zeit.

Mit dem erfindungsgemäßen Fräswerkzeug ist darüber hinaus jedoch auch eine erhebliche Reduzierung der Nebenzeiten und eine bessere Ausnutzung des vorhandenen Schneidstoffes erzielbar. Ferner können Bearbeitungsungenauigkeiten vermieden werden, die bei konventionellen mehrteiligen Fräswerkzeugen aus einem Werkzeugwechsel resultieren. Da bei dem erfindungsgemäßen Fräswerkzeug mindestens zwei der Einzelwerkzeuge unabhängig voneinander axial auf der Spannbuchse verschiebbar, also einstellbar sind (was grundsätzlich stufenlos und/oder in Stufen möglich ist), kann die Verwendung von Distanzscheiben oder dergleichen und das damit verbundene aufwendige und zeitintensive Bestücken und/oder Umrüsten des Werkzeuges gänzlich entfallen. Damit sind die Verstellmöglichkeiten auch nicht durch die Anzahl und die Abmessungen von verfügbaren Distanzscheiben beschränkt. Der im Wesentlichen durch die jeweiligen Einzelwerkzeuge gebildete Werkzeugsatz des erfindungsgemäßen Fräswerkzeugs muss zum Einstellen auch nicht von einer Arbeitsspindel oder dergleichen entfernt werden. Vielmehr können Einstellung schnell und unkompliziert direkt im montierten Zustand erfolgen. Die bei konventionellen Fräswerkzeugen aus einem Werkzeugwechsel per se resultierenden Bearbeitungsungenauigkeiten treten bei der erfindungsgemäßen Lösung daher nicht auf, und ein vollständig neues Ein- und Ausrichten des Werkzeuges entfällt. Rüstzeiten werden dadurch deutlich verringert.

Aufgrund der raschen und individuellen Verstellbarkeit von mindestens zwei der Einzelwerkzeuge sind überdies unterschiedlichste Bearbeitungsmaße einstellbar, und das erfindungsgemäße Fräswerkzeug lässt sich somit variabel an unterschiedliche Gegebenheiten und/oder unterschiedliche Bearbeitungsvorgaben anpassen. Diese Art der Verstellung eröffnet auch die Möglichkeit, dass zwei oder mehrere oder sogar alle der Einzelwerkzeuge, einschließlich des Referenzwerkzeuges, eine zusammenwirkende Funktionseinheit bilden, welche das gewünschte Profil aus dem Werkstück herausfräst. Dieses Zusammenwirken eröffnet letztendlich erst entsprechend vielfältigere Einstell- und Korrekturmöglichkeiten. Werden zwei der Einzelwerkzeuge zum Beispiel zum Herstellen einer Nut verwendet, so kann die Nutbreite durch Verschieben von mindestens einem dieser Einzelwerkzeuge schnell und problemlos der jeweils geforderten Nutbreite angepasst werden.

Da bei dem erfindungsgemäßen Fräswerkzeug eines der Einzelwerkzeuge ein ortsfestes, d.h. ein nicht verschiebbares, mit der Spannbuchse verbundenes und gegenüber den verschiebbaren Einzelwerkzeugen gewissermaßen fixes Referenzwerkzeug ist, lässt sich für die anderen, d.h. die verschiebbaren Einzelwerkzeuge eine feste Referenzposition oder Bezugsposition schaffen, die es ermöglicht, eine gewollte Bearbeitungsmaß-Änderung durchzuführen und/oder eine durch Werkzeugverschleiß verursachte Profiländerung zu korrigieren, ohne dass es erforderlich ist, das gesamte Werkzeug neu ein-und auszurichten. Das Referenzwerkzeug selbst unterliegt natürlich auch einem Verschleiß. Es ist daher zweckmäßig, das Referenzwerkzeug zur Bearbeitung weniger verschleißfördernder Bereiche des Werkstückes einzusetzen, so dass es möglichst lange in unveränderter Position die fixe Referenzposition für die verschiebbaren Werkzeuge bilden kann. Aus dem gleichen Grunde empfiehlt es sich, eines der verschiebbaren Einzelwerkzeug zur Bearbeitung eines verschleißträchtigeren Werkstückbereiches einzusetzen, da dann leichter eine entsprechende Nachstellung in Bezug zum Referenzwerkzeug vorzunehmen ist.

Die einfache Verschiebbarkeit bzw. Verstellbarkeit von mindestens zwei der Einzelwerkzeuge gestattet es des Weiteren, verschlissene Schneidenbereiche, und eben nur diese, durch unverbrauchte scharfe Schneidenbereiche zu ersetzen, ohne dass es erforderlich ist, das betroffene Einzelwerkzeug auszutauschen oder gar das gesamte Fräswerkzeug zu demontieren. Dies ist besonders dann sehr vorteilhaft, wenn mindestens eines der Einzelwerkzeuge einem höheren Verschleiß als die anderen Einzelwerkzeuge unterliegt. Denn nicht nur die Einzelgesamtstandzeit des betroffenen Einzelwerkzeugs, sondern auch die Gesamtstandzeit des vollständigen Fräswerkzeugs wird durch die erfindungsgemäßen Verstellmöglichkeiten wesentlich erhöht. Das Referenzwerkzeug stellt hierbei in Kombination mit den verschiebbaren Einzelwerkzeuge die hohe Reproduzierbarkeit des Fertigungsergebnisses sicher, ohne dass es aufwendiger Einstellarbeiten mit damit verbundenen langen Stillstandszeiten bedarf.

Die im vorangegangenen Absatz geschilderten Vorteile gelten gleichermaßen für den Fall, dass die Einzelwerkzeuge bzw. ihre Schneiden nach Erreichen Ihrer jeweiligen Einzelgesamtstandzeit nachgeschärft werden. Denn eine durch das Nachschärfen bedingte Veränderung der Schneidengeometrie sowie eine damit zusammenhängende Änderung eines erforderlichen Bearbeitungsmaßes kann im Wesentlichen auf die gleiche Weise wie zuvor für den Fall eines partiellen Schneidenverschleißes beschrieben durch die erfindungsgemäßen Verstell- und Korrekturmöglichkeiten ausgeglichen werden.

Das erfindungsgemäße Fräswerkzeug ermöglicht somit eine optimale Ausnutzung des vorhandenen Schneidstoffes. Und die Gesamtstandzeit des erfindungsgemäßen Fräswerkzeug sowie die Anzahl seiner möglichen Nachschärfungen kann unter Beibehaltung der für die Fertigung erforderlichen Maße, zum Beispiel einer Nut- oder Federbreite, erhöht werden. Bekanntlich hängt die Produktivität im starken Maße von den Bearbeitungszeiten und mehr noch von den Nebenzeiten, das heißt der Summe der Werkzeugwechselzeiten ab. Da mit dem erfindungsgemäßen Fräswerkzeug sowohl die Bearbeitungs- als auch die Werkzeugwechselzeiten deutlich reduziert werden können, und zudem eine ausgezeichnete Fertigungsgenauigkeit erzielbar ist, trägt die erfindungsgemäße Lösung zu einer wesentlichen Steigerung der Produktivität und zu einer wirtschaftlich und technisch effektiveren Fertigung bei.

Weitere bevorzugte vorteilhafte Ausgestaltungsmerkmale des erfindungsgemäßen mehrteiligen Fräswerkzeuges sind Gegenstand der Unteransprüche 2 bis 19.

Die der Erfindung zugrunde liegende Aufgabe wird ferner gelöst durch ein erfindungsgemäßes Verfahren mit den Merkmalen des Anspruchs 20.

Das erfindungsgemäße Verfahren offeriert im Wesentlichen die gleichen Vorteile, wie sie bereits weiter oben im Zusammenhang mit dem erfindungsgemäßen Fräswerkzeug erläutert wurden. Darüber hinaus bietet es jedoch die Möglichkeit einer einem qualitativ hochwertigen Bearbeitungsergebnis zuträglichen, besonders präzisen Werkzeugeinstellung und einer weiter optimierten Ausnutzung des vorhandenen Schneidstoffes.

Zusätzliche bevorzugte vorteilhafte Ausführungsformen des erfindungsgemäßen Verfahrens sind Gegenstand der Unteransprüche 21 bis 27.

Ausführungsbeispiele der Erfindung sind nachfolgend unter Bezugnahme auf die beigefügten Zeichnungen näher beschrieben und erläutert.

### KURZE BESCHREIBUNG DER ZEICHNUNGEN

Es zeigen in schematischer und nichtmaßstäblicher Darstellung die
- Fig. 1: einen Längsschnitt durch ein erfindungsgemäßes mehrteiliges Fräswerkzeug zur Herstellung einer Feder und zur Bearbeitung einer Stirnfläche eines Werkstückes, gemäß einer ersten Ausführungsform,
- Fig. 2: einen Ausschnitt Y aus der Fig. 1 mit dem zu bearbeitenden Werkstück,
- Fig. 3: eine der Fig. 2 ähnelnde Ansicht, die zum Zwecke der Verdeutlichung jedoch nur ein mittleres Referenzwerkzeug des erfindungsgemäßen Fräswerkzeugs von Fig. 1 und 2 darstellt,
- Fig. 4: eine der Fig. 2 ähnelnde Ansicht, die zum Zwecke der Verdeutlichung jedoch nur ein oberes, verschiebbares Einzelwerkzeug des erfindungsgemäßen Fräswerkzeugs von Fig. 1 und 2 darstellt,
- Fig. 5: eine der Fig. 2 ähnelnde Ansicht, die zum Zwecke der Verdeutlichung jedoch nur ein unteres, verschiebbares Einzelwerkzeug des erfindungsgemäßen Fräswerkzeugs von Fig. 1 und 2 darstellt,
- Fig. 6: einen Längsschnitt durch ein erfindungsgemäßes mehrteiliges Fräswerkzeug zur Herstellung einer Nut und zur Bearbeitung einer Stirnfläche eines Werkstückes, gemäß einer zweiten Ausführungsform, und
- Fig. 7: einen Ausschnitt Z aus der Fig. 6 mit dem zu bearbeitenden Werkstück.

### BESCHREIBUNG VON AUSFÜHRUNGSBEISPIELEN DER ERFINDUNG

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

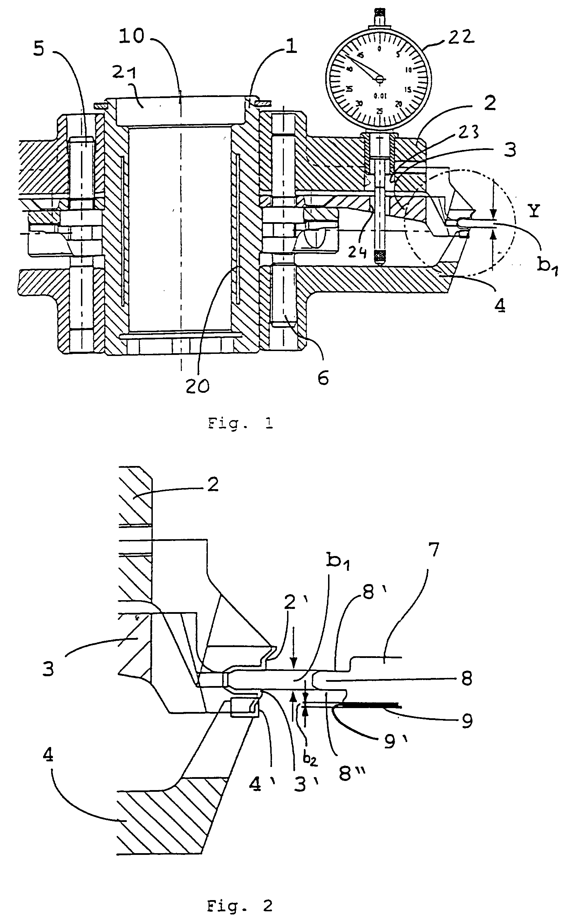

Fig. 1 zeigt in einem schematischen und nichtmaßstäblichen Längsschnitt eine erste Ausführungsform eines erfindungsgemäßen mehrteiliges Fräswerkzeug zum Profilieren, das heißt hier zur Herstellung einer Feder 8 und zum Fügen einer Stirnseite oder Stirnfläche an einem zu bearbeitenden, plattenförmigen Werkstück. In der Fig. 2 ist ein Ausschnitt Y aus der Fig. 1 mit dem zu bearbeitenden Werkstück 7 dargestellt. Das Werkstück 7 besitzt eine Deckschicht 9 aus einem relativ harten, verschleiß- oder abriebfesten Material. Die Deckschicht 9 kann je nach Plattenmaterial eine unterschiedliche Dicke aufweisen.

Wie in den Zeichnungen erkennbar, umfasst das Fräswerkzeug eine Spannbuchse 1 mit einer zentralen Werkzeugbohrung 21 und einer vertikalen Werkzeugachse 10. In die Spannbuchse 1 ist ein Hydro-Spannelement 20 integriert. Mittels der Werkzeugbohrung 21 und des Hydro-Spannelementes 20 ist das Fräswerkzeug spielfrei und reibschlüssig auf einer in den Figuren nicht gezeigten Antriebwelle fixierbar. Auf der Spannbuchse 1 ist ein Werkzeugsatz mit im vorliegenden Beispiel drei drehfest und axial übereinander angeordneten Einzelwerkzeugen 2, 3, 4 montiert. Von diesen drei Einzelwerkzeugen 2, 3, 4 ist eines, nämlich das gemäß der Darstellung in den Figuren mittlere Einzelwerkzeug 3, ein ortsfest mit der Spannbuchse 1 verbundenes Referenzwerkzeug 3, das eine Referenzposition für die zwei anderen Einzelwerkzeuge 2, 4 darstellt, wie nachfolgend noch detaillierter erläutert werden wird.

Die zwei anderen Einzelwerkzeuge 2, 4, also das obere und das untere Einzelwerkzeug in den Zeichnungen, sind zum Einen durch das Hydro-Spannelement 20 auf eine nachfolgend noch näher beschriebene Art und Weise reibschlüssig auf der Spannbuchse 1 fixierbar und zum Anderen relativ zu dem Referenzwerkzeug 3 unabhängig voneinander axial und stufenlos auf der Spannbuchse 1 verschiebbar. Zu dem letztgenannten Zweck sind die zwei verschiebbaren Einzelwerkzeuge 2, 4 jeweils mit einer im Fräswerkzeug gelagerten Verstellspindel 5, 6 gekoppelt. Die Verstellspindeln 5, 6 erstrecken sich jeweils durch das Referenzwerkzeug 3 hindurch und sind jeweils unabhängig voneinander von der Oberseite des Fräswerkzeuges, d.h. hier von der Oberseite des Einzelwerkzeuges 2 her stufenlos verstellbar.

Um die zuvor beschriebene Fixierung und Verschiebbarkeit der Einzelwerkzeuge 2 und 4 zu gewährleisten, ist das Hydro-Spannelement 20 derart ausgestaltet, dass es zu Beginn einer Druckleinleitung zur Werkzeugbohrung 21 hin wirkt und somit zunächst einmal die Spannbuchse 1 spielfrei auf der Antriebswelle fixiert. Wird der Druck erhöht, wirkt das Hydro-Spannelement 20 auch nach Außen. Hierdurch werden die beiden verschiebbaren Einzelwerkzeuge 2, 4 spielfrei auf der Spannbuchse 1 fixiert. In diesem Zustand sind die Einzelwerkzeuge 2, 4 folglich nicht verschiebbar. Um ein Verschieben zu ermöglichen, muss also der zuerst geschilderte geringfügigere Druckzustand des Hydro-Spannelement 20 vorherrschen. Dann können die Einzelwerkzeuge 2 und 4 mittels ihrer jeweiligen Verstellspindeln 5, 6 unabhängig voneinander in gewünschter Weise stufenlos verschoben werden. Anschließend wird der Druck in dem Hydro-Spannelement 20 wieder soweit erhöht, dass die beiden Einzelwerkzeuge 2 und 4 in ihrer Lage fixiert werden.

Aus der Fig. 1 ist des Weiteren ersichtlich, dass das obere verschiebbare Einzelwerkzeug 2 und das Referenzwerkzeug 3 jeweils mit einer Durchgangsöffnung 23, 24 versehen sind. In die Durchgangsöffnung 23 ist bei Stillstand des Fräswerkzeuges eine Verschiebungsweg-Kontrolleinrichtung 22 (hier: eine Messuhr) derart lösbar einpassbar, dass sich ihr Messfühler durch die Durchgangsöffnung 24 erstreckt, gegen die Innenseite des unteren verschiebbaren Einzelwerkzeuges 4 zur Anlage kommt und somit mit dem Einzelwerkzeuges 4 gekoppelt ist. Auf diese Weise ist der Verschiebeweg des Einzelwerkzeuges 4 kontrollierbar. Für das obere verschiebbare Einzelwerkzeug 2 ist eine entsprechende Verschiebungsweg-Kontrolleinrichtung vorgesehen, die in der Fig. 1 der Übersichtlichkeit halber jedoch nicht dargestellt ist.

Alle drei Einzelwerkzeuge 2, 3, 4 sind vorzugsweise als Verbundwerkzeuge mit aufgelöteten polykristallinen Schneiden 2', 3', 4' (hier: Schneiden aus polykristallinem Diamant) ausgestaltet, was in Verbindung mit dem Hydro-Spannelement eine optimale Rundlaufgenauigkeit gewährleistet.

Wie besonders deutlich in der Detailansicht Y gemäß Fig. 2 zu erkennen, ist die Anordnung der drei Einzelwerkzeuge 2, 3, 4 und ihrer jeweiligen Schneiden 2', 3', 4' relativ zueinander so gewählt, dass die Schneiden von jeweils zwei benachbarten Einzelwerkzeugen in einen am Umfang des jeweils benachbarten Einzelwerkzeugs vorgesehenen Zwischenraum zwischen benachbarten Werkzeugschneiden des jeweils anderen dieser zwei Einzelwerkzeuge eingreifen. Dadurch überlappen sich die Wirkungsbereiche der Werkzeugschneiden der jeweils zwei benachbarten Einzelwerkzeuge in axialer Richtung. Genauer gesagt überlappen sich im vorliegenden Ausführungsbeispiel zum Einen parallel zur Werkzeugachse 10 verlaufende Bereiche der Schneiden 2', 3' des oberen Einzelwerkzeugs 2 und des mittleren Referenzwerkzeugs 3 und zum Anderen Bereiche der Schneiden 3', 4' des Referenzwerkzeugs 3 und des unteren Einzelwerkzeugs 4.

Bei dem vorliegenden ersten Ausführungsbeispiel bilden das erste, d.h. das obere verschiebbare Einzelwerkzeug 2 und das Referenzwerkzeug 3 zusammen ein zweiteiliges Feder-Fräswerkzeug 2, 3 zum Herstellen der Feder 8 an der Stirnseite des Werkstückes 7. Das obere verschiebbare Einzelwerkzeug 2 stellt hierbei ein oberes Feder-Fräswerkzeugteil und das Referenzwerkzeug 3 ein in Bezug dazu unteres Feder-Fräswerkzeugteil dar. Das zweite, d.h. das untere verschiebbare Einzelwerkzeug 4 ist als Füge-Werkzeug ausgebildet, welches hauptsächlich zum Bearbeiten bzw. Fügen der Deckschicht 9 des Werkstückes 7 dient.

Jedes dieser drei Einzelwerkzeuge 2, 3 ,4 ist primär dazu ausgelegt, einen jeweils anderen Bereich des Werkstückrandes des Werkstückes 7 zu bearbeiten, jedoch wirken die Einzelwerkzeuge 2, 3 ,4 im laufenden Betrieb des erfindungsgemäßen Fräswerkzeugs zumindest in Teilbereichen derart zusammen, dass eine vollständige Bearbeitung des Werkstückrandes, d.h. sowohl das Profilieren als auch das Fügen, in einem einzigen Arbeitgang erfolgt.

Dies soll anhand der Fig. 2 näher erläutert werden. Wie in dieser Zeichnung genauer erkennbar, bearbeiten die Schneiden 2' des oberes Feder-Fräswerkzeugteils 2 einen oberen Profilbereich 8' und die Schneiden 3' des unteren Feder-Fräswerkzeugteils 3 (Referenzwerkzeug 3) einen unteren Profilbereich 8'' des Werkstückrandes. Der gegenseitige axiale Abstand zwischen den Schneiden 2' und 3' definiert hierbei ein erstes Bearbeitungsmaß b1, nämlich die Federbreite b1. Da sich die Schneiden 2', 3' zudem an einem parallel zur Werkzeugachse 10 verlaufenden Schneidenbereich teilweise überdecken oder überlappen, wie bereits weiter oben erwähnt, fräsen sie in Zusammenwirkung die Feder 8 aus dem Werkstückrand heraus und bearbeiten hierbei auch angrenzende Flächen der Stirnseite des Werkstückes 7. Die Schneiden 4' des Füge-Werkzeuges wiederum, die sich ebenfalls teilweise mit den Schneiden 3' des unteren Feder-Fräswerkzeugteils 3 (Referenzwerkzeug 3) überlappen, bearbeiten primär die Deckschicht 9, genauer gesagt eine Deckschichtkante 9', sowie unmittelbar angrenzende Stirnflächenbereiche des Werkstücks 7.

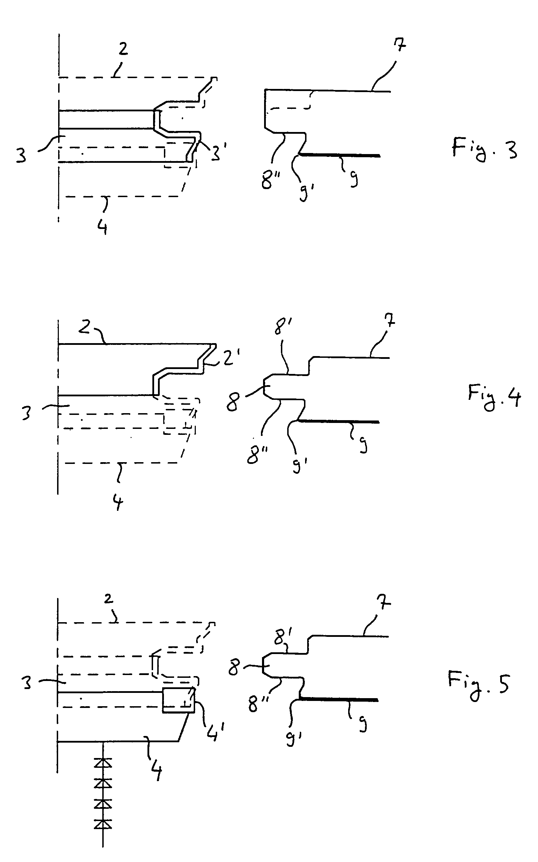

In den Fig. 3 bis 5 sind die jeweiligen, aus den betreffenden Einzelwerkzeugen 2, 3, 4 resultierenden Bearbeitungsstadien zum Zwecke der besseren Veranschaulichung nochmals getrennt voneinander dargestellt.

Fig. 3 zeigt in einer der Fig. 2 ähnelnden Ansicht, wie das untere Feder-Fräswerkzeugteil 3 (Referenzwerkzeug 3) den unteren Profilbereich 8'' des Werkstückrandes beziehungsweise der Feder 8 formt. Die anderen Einzelwerkzeuge sind durch gestrichelte Linien angedeutet.

Fig. 4 zeigt in einer der Fig. 2 ähnelnden Ansicht, wie das obere Feder-Fräswerkzeugteil 2 den oberen Profilbereich 8' des Werkstückrandes beziehungsweise der Feder 8 formt. Die anderen Einzelwerkzeuge sind wiederum durch gestrichelte Linien angedeutet.

Fig. 5 zeigt in einer der Fig. 2 ähnelnden Ansicht, wie das Füge-Werkzeug 4 die Deckschicht 9 beziehungsweise die Deckschichtkante 9' sowie die unmittelbar angrenzenden Stirnflächenbereiche des Werkstücks 7 bearbeitet. Die anderen Einzelwerkzeuge sind wiederum durch gestrichelte Linien angedeutet.

Es wird an dieser Stelle nochmals ausdrücklich darauf hingewiesen, dass die in Fig. 3 bis 5 illustrierten Bearbeitungsstadien aufgrund der Ausgestaltung des erfindungsgemäßen Fräswerkzeuges und des Zusammenwirkens seiner jeweiligen Einzelwerkzeuge 2, 3 4 im Wesentlichen gleichzeitig, d.h. während einer Werkzeugumdrehung oder eines Bruchteils einer Werkzeugumdrehung, erzielt werden.

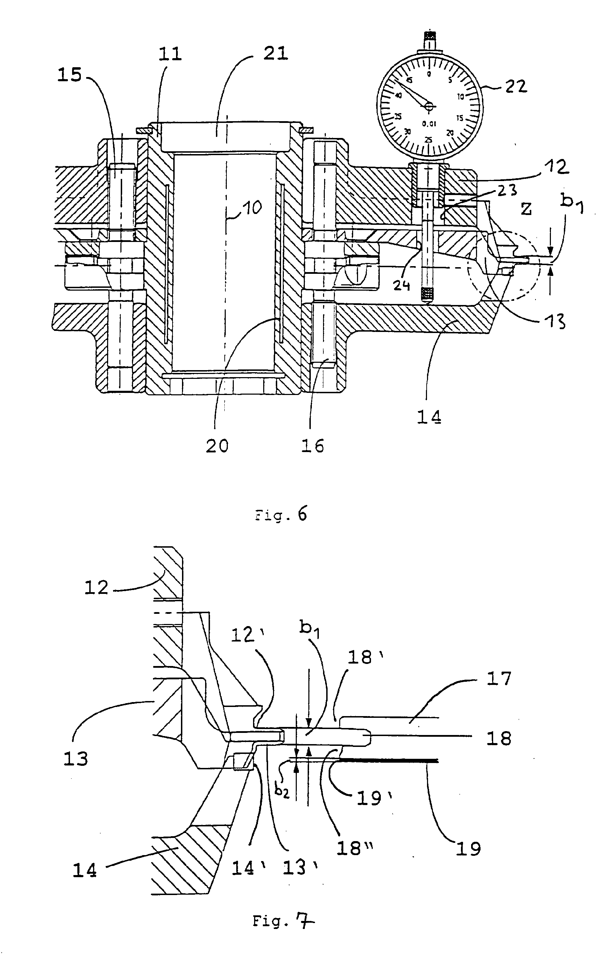

Fig. 6 zeigt in einem schematischen und nichtmaßstäblichen Längsschnitt eine zweite Ausführungsform eines erfindungsgemäßen mehrteiliges Fräswerkzeug zum Profilieren, das heißt hier zur Herstellung einer Nut 18 und zum Fügen einer Stirnseite oder Stirnfläche an einem zu bearbeitenden, plattenförmigen Werkstück. In der Fig. 7 ist ein Ausschnitt Z aus der Fig. 6 mit dem zu bearbeitenden Werkstück 17 dargestellt.

Der grundlegende Aufbau des Fräswerkzeuges gemäß der zweiten Ausführungsform entspricht weitgehend dem der ersten Ausführungsform, so dass die nachfolgende Beschreibung der zweiten Ausführungsform entsprechend knapper gefasst werden kann.

Das Fräswerkzeug nach Fig. 6 und 7 umfasst wiederum eine Spannbuchse 11 mit einer zentralen Werkzeugbohrung 21 und einer vertikalen Werkzeugachse 10. Ferner ist in die Spannbuchse 11 ein Hydro-Spannelement 20 integriert. Auf der Spannbuchse 11 ist ein Werkzeugsatz mit drei drehfesten axial übereinander angeordneten Einzelwerkzeugen 12, 13, 14 montiert. Das obere verschiebbare Einzelwerkzeug 12 und das mittlere Einzelwerkzeug 13, d.h. das Referenzwerkzeug 13, bilden zusammen ein zweiteiliges Nuten-Fräswerkzeug 12, 13 zum Herstellen einer Nut 18 an der Stirnseite des Werkzeuges 17. Das obere verschiebbare Einzelwerkzeug 12 stellt hierbei ein oberes Nut-Fräswerkzeugteil 12 und das Referenzwerkzeug 13 ein in Bezug dazu unteres Nut-Fräswerkzeugteil 13 dar. Das zweite, d.h. das untere verschiebbare Einzelwerkzeug 14 ist wiederum als Füge-Werkzeug ausgebildet, welches hauptsächlich zum Bearbeiten bzw. Fügen der Deckschicht 19 des Werkstückes 17 dient. Die Schneiden 12' des oberen Nut-Fräswerkzeugteils 12 bearbeiten einen oberen Nutenbereich 18', und die Schneiden 13' des unteren Nut-Fräswerkzeugteils 13 (Referenzwerkzeug 13) bearbeiten einen unteren Nutenbereich 18'' des Werkstückrandes. Der gegenseitige axiale Abstand zwischen den Schneiden 12' und 13' definiert die Nutenbreite b1. Die sich teilweise überdeckenden Schneiden 12', 13' fräsen in Zusammenwirkung die Nut 18 aus dem Werkstückrand heraus und bearbeiten hierbei auch angrenzende Flächen der Stirnseite des Werkstückes 17. Die Schneiden 14' des Füge-Werkzeuges wiederum, die ebenfalls teilweise mit den Schneiden 13' des unteren Nut-Fräswerkzeugesteils (Referenzwerkzeug 13) überlappen, bearbeiten primär die Deckschicht 19, genauer gesagt die Deckschichtkante 19', sowie unmittelbar angrenzende Stirnflächen des Werkstückes 17.

Es wird nun das Einrichten eines erfindungsgemäßen Fräswerkzeuges sowie das mit diesem Fräswerkzeug ausführbare erfindungsgemäße Fräsverfahren beschrieben werden.

Für die nachfolgende Beschreibung wird angenommen, dass die Werkstückbearbeitung im Durchlauf in einer sogenannten Durchlaufanlage erfolgt (ebenso wäre natürlich auch eine stationäre Werkstückbearbeitung in einem Bearbeitungszentrum möglich). Hierzu wird das zu bearbeitende Werkstück 17 mit seiner abriebfesten Deckschicht 19 nach unten auf ein in den Zeichnungen nicht dargestelltes Transportband oder Kettenband der Durchlaufanlage gelegt, so dass es die in Fig. 7 dargestellte Grundanordnung einnimmt. Zum Einrichten der Durchlaufanlage und zum Voreinstellen des Fräswerkzeuges steht das Werkstück 17 zweckmäßigerweise zunächst still.

Ferner wird angenommen, dass mit dem in den Fig. 6 und 7 dargestellten erfindungsgemäßen Fräswerkzeug gearbeitet wird. Das Referenzwerkzeug 13, d.h. das untere Nut-Fräswerkzeugteil 13, und das oberen verschiebbare Nut-Fräswerkzeugteil 12 dienen hierbei zum Profilieren der Nut 18 und des oberer Profilbereichs 18' sowie des unteren Profilbereichs 18'' der Werkstückstirnseite, während das verschiebbare Füge-Werkzeug 14 zum Bearbeiten bzw. Fügen der verschleißfesten Deckschicht 19 bzw. Deckschichtkante 19' des Werkstückes 17 verwendet wird.

Vorerst einmal wird das Fräswerkzeug in dem in Fig. 6 dargestellten voreingestellten Zustand, jedoch ohne die Messuhr 22 mit seiner Werkzeugbohrung 21 auf die Antriebsspindel geschoben. Durch Druckbeaufschlagung des Hydrospannelementes 20 werden sowohl die Spannbuchse 11 auf der Antriebswelle als auch die verschiebbaren Einzelwerkzeuge 12 und 14 in ihrer Lage fixiert. Das Fräswerkzeug wird dann derart an dem zu bearbeitenden Werkstück 17 positioniert, dass das Referenzwerkzeug 13, d.h. das untere Nut-Fräswerkzeugteil 13, in eine vorbestimmte Bearbeitungsposition gebracht wird, die eine Referenzposition für das verschiebbare obere Nut-Werkzeugteil 12 und das verschiebbare Füge-Werkzeug 14 darstellt. Zu diesem Zweck kann das Fräswerkzeug beispielsweise durch vertikales und bei Bedarf auch horizontales Verfahren eines Motorsupports, welcher eine Antriebseinrichtung des Fräswerkzeuges trägt, in die gewünschte Bearbeitungsposition gebracht werden.

Durch axiales Verschieben des oberen Nut-Fräswerkzeugteils 12 relativ zu der durch das Referenzwerkzeug 13, d.h. dem zweiten Nut-Fräswerkzeugteil 13, bestimmten Referenzposition in eine erste Anfangsposition wird die Nutenbreite b1 eingestellt, die sich aus einem Zusammenwirken des Referenzwerkzeuges 13 und des oberen Nut-Fräswerkzeugteils 12 ergibt. Das Verschieben des oberen Nut-Fräswerkzeugteils 12 erfolgt durch Verstellen der Spindel 15 in axialer Richtung. Zum Einstellen und Kontrollieren der Nutenbreite b1 wird die Messuhr 22 verwendet.

Zum Einstellen des im vorliegenden Fall aus einem Zusammenwirken des Referenzwerkzeuges 13 und dem verschiebbaren Füge-Werkzeug 14 resultierenden zweiten Bearbeitungsmaßes, nämlich der Deckschichtdicke b2, wird das Füge-Werkzeug 14 relativ zu der durch das Referenzwerkzeug 13 bestimmten Referenzposition axial in eine zweite Anfangsposition verschoben. Dies wird durch Verstellen der Verstellspindel 16 vorgenommen. Das Verschieben des Füge-Werkzeuges 14 erfolgt in diesem Ausführungsbeispiel von einer relativ zur Deckschicht 19 und dem Referenzwerkzeug 13 axial distanzierten Position, d.h. bezogen auf die Darstellung der Fig. 7, von unten her in Richtung zum Referenzwerkzeug 13. Das Füge-Werkzeug 14 und seine Schneiden 14' werden hierbei anfänglich derart positioniert, dass zunächst nur ein oberer, radialer Schneidenabschnitt der Schneiden 14' die Deckschicht 19 bzw. die Deckschichtkante 19' mit dem erforderlichen Bearbeitungsmaß b2 zerspant und abträgt.

Wie bereits weiter oben erwähnt, muss 14 bei der vorliegenden Ausgestaltungsform des erfindungsgemäßen Fräswerkzeugs zum Verstellen der verschiebbaren Einzelwerkzeuge 12 die Druckbeaufschlagung des Hydro-Spannelementes 20 entsprechend reduziert und anschließend zum sicheren Fixieren der verschiebbaren Einzelwerkzeuge 12 und 14 wieder erhöht werden. Ebenso ist klar, dass sich das Fräswerkzeug bei der Verstellung der Einzelwerkzeuge 12 und 14 nicht in Rotation befinden darf.

Dann wird zunächst ein Musterwerkstück hergestellt. Zeigt sich bei der Herstellung dieses Musterwerkstückes bzw. nach dem Vermessen des mit Hilfe des erfindungsgemäßen Fräswerkzeugs hergestellten (Nuten-)Profils, dass Korrekturen erforderlich sind, werden die Werkzeugeinstellungen entsprechend geändert. Diese Korrekturen können nach einer Druckminderung im Hydro-Spannelement 20 direkt und stufenlos durch Verdrehen der Verstellspindel 15 unabhängig voneinander vorgenommen werden. Die Verstellung des Fügewerkzeuges 14 kann stufenlos durch die Verstellspindel 16 vorgenommen werden. Anschließend wird der Druck in dem Hydro-Spannelement 20 wieder soweit erhöht, dass das verschiebbare obere Nut-Fräswerkzeugteil 12 und das verschiebbare Füge-Werkzeug 14 in ihrer Lage fixiert werden.

Im laufenden Betrieb des erfindungsgemäßen Fräswerkzeugs führt die hohe Abriebfestigkeit bzw. das abrasive Verhalten der Deckschicht 19 dazu, dass die Schneiden 14' des Füge-Werkzeuges 14 in dem mit der Deckschicht 19 im Eingriff befindlichen Bereich nach vergleichsweise kurzer Zeit starke Verschleißmerkmale aufweisen bzw. wesentlich schneller als die Schneiden 12' und 13' der übrigen Einzelwerkzeuge verschleißen, so dass die geforderte Schnittkantengüte nicht mehr erreicht werden kann. Bei Erreichen eines vorbestimmten Verschleißes wird das Füge-Werkzeug 14 daher um einen Betrag, welcher entweder einer axialen Länge des verschlissenen Schneidenabschnitts oder aber mindestens der Dicke b2 der Deckschicht 19 entspricht, durch Verstellen der Verstellspindel 16 nach oben in Richtung zu dem Referenzwerkzeug 19 hin verschoben. Dadurch gelangt ein neuer unverbrauchter Schneidenabschnitt mit der Deckschicht 19 in Eingriff. Mit anderen Worten wird der verschlissene Schneidenbereich, und eben nur dieser, durch einen scharfen Bereich ersetzt. Es ist ersichtlich, dass dieser Vorgang bei Erreichen eines erneuten vorbestimmten Verschleißes solange wiederholt werden kann, bis ein maximaler Gesamtstandweg der Schneiden 14' erreicht und die Schneiden 14' somit verbraucht sind. Das Produkt aus der Anzahl der Verstellungen mal Einzelstandweg der Schneidenabschnitte der Schneiden 14' sollte hierbei nach Möglichkeit den Einzelstandwegen der Schneiden 12', 13' der beiden anderen Einzelwerkzeuge 12 und 13 entsprechen. Die Erfindung ist hierauf jedoch nicht beschränkt.

Wird bei dem oberen verschiebbaren Nut-Fräswerkzeugteil 12 und dem unteren Nut-Fräswerkzeugteil 13, d.h. dem Referenzwerkzeug 13 verschleißbedingt die geforderte Schnittgüte nicht mehr erreicht, werden die Schneiden nachgeschärft. Um möglichst viele Nachschärfmöglichkeiten zu haben, werden jeweils nur die vorhandenen Verschleißmarken abgetragen. Das Abtragen des Schneidenverschleißes führt natürlich zu einer Veränderung der Schneidengeometrie und somit auch zu einer Veränderung des Nutenprofils, was korrigiert werden muss. Dies erfolgt wiederum durch eine entsprechende, stufenlose Verstellung der Verstellspindel 15. Wenn das obere Nut-Fräswerkzeugteil 12 und das untere Nut-Fräswerkzeugteil 13 (Referenzwerkzeug 13) vollständig verschlissen sind, ist es zweckmäßig, das gesamte Fräswerkzeug nachzuschärfen und dann wieder in Einsatz zu bringen.

Die Erfindung ist nicht auf die obigen Ausführungsbeispiele, die lediglich der allgemeinen Erläuterung des Kerngedankens der Erfindung dienen, beschränkt. Im Rahmen des Schutzumfangs können das erfindungsgemäße Fräswerkzeug und das erfindungsgemäße Verfahren vielmehr auch andere als die oben beschriebenen Ausgestaltungsformen bzw. Ausführungsformen annehmen. Das Fräswerkzeug und das Verfahren können hierbei insbesondere Merkmale aufweisen, die eine Kombination aus allen oder nur bestimmten der jeweiligen Einzelmerkmale der zugehörigen Ansprüche darstellen. Obwohl das Fräswerkzeug in den geschilderten Beispielen auf einer vertikalen Antriebswelle angeordnet ist, kann es in anderen Varianten natürlich ebenso auf einer horizontalen, geneigten oder um 180° gedrehten vertikalen Antriebswelle montiert sein. Je nach Sichtweise würde man in diesen Fällen dann die Einzelwerkzeuge beispielsweise als axial nebeneinander liegend betrachten und von einem linken, mittleren und rechten Einzelwerkzeug sprechen. Bei einer im Vergleich zu den in den Zeichnungen dargestellten Ausführungsformen um 180° gedrehten vertikalen Antriebswelle wäre das obere Einzelwerkzeug dann das untere Einzelwerkzeug usw. Es ist also klar, dass diese Begriffe jeweils analog auszulegen sind.

Obwohl das erfindungsgemäße Fräswerkzeug in den oben erläuterten Ausführungsbeispielen zum Verstellen stillstehen muss, ist es ebenso denkbar, in einer anderen Variante eine Verstelleinrichtung vorzusehen, welche ein Einstellen oder Nachstellen des Werkzeuges beziehungsweise seiner Einzelwerkzeuge auch während des laufenden Betriebs gestattet.

Das erfindungsgemäße Fräswerkzeug kann zudem insgesamt mehr als drei Einzelwerkzeuge und mehr als zwei verschiebbare Einzelwerkzeuge aufweisen. Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Spannbuchse
- 2: Erstes verschiebbares Einzelwerkzeug / Erstes Feder-Fräswerkzeugteil
- 2': Schneide(n)
- 3: Zweites Feder-Fräswerkzeugteil / Referenzwerkzeug
- 3': Schneide(n)
- 4: Zweites verschiebbares Einzelwerkzeug / Füge-Werkzeug
- 4': Schneide(n)
- 5: Verstellspindel
- 6: Verstellspindel
- 7: Werkstück
- 8: Feder
- 8': Oberer Profilbereich
- 8": Unterer Profilbereich
- 9: Deckschicht
- 9': Deckschichtkante

- 10: Werkzeugachse
- 11: Spannbüchse
- 12: Erstes Nut-Fräswerkzeugteil
- 12': Schneide(n)
- 13: Zweites Nut-Fräswerkzeugteil / Referenzwerkzeug
- 13': Schneide(n)
- 14: Füge-Werkzeug
- 14': Schneide(n)
- 15: Verstellspindel
- 16: Verstellspindel
- 17: Werkstück
- 18: Nut
- 18': Oberer Profilbereich
- 18": Unterer Profilbereich
- 19: Deckschicht
- 19': Deckschichtkante
- 20: Spannelement
- 21: Werkzeugbohrung
- 22: Verschiebungsweg-Kontrolleinrichtung / Messuhr
- 23: Durchgangsöffnung in 2, 12
- 24: Durchgangsöffnung in 3, 13

- b1: Nutbreite / Federbreite
- b2: Dicke der Deckschicht 9 oder 19

## Patentansprüche

1. Mehrteiliges Fräswerkzeug zum Profilieren von Werkstücken (7; 17), insbesondere zur Herstellung von Nut und Feder, und zum Fügen von Stirnseiten von plattenförmigen Werkstücken (7; 17) aus Holz und/oder Holzwerkstoffen, umfassend:
eine Spannbuchse (1, 11), auf der ein Werkzeugsatz mit mindestens drei drehfest und axial übereinander angeordneten Einzelwerkzeugen (2, 3, 4; 12, 13, 14) montiert ist, von denen ein Einzelwerkzeug (3; 13) ein ortsfest mit der Spannbuchse (1, 11) verbundenes Referenzwerkzeug (3; 13) ist, relativ zu dem die jeweils mindestens zwei anderen Einzelwerkzeuge (2, 4; 12, 14) unabhängig voneinander axial auf der Spannbuchse (1, 11) verschiebbar sind.

2. Mehrteiliges Fräswerkzeug nach Anspruch 1,
**dadurch gekennzeichnet, dass**
das Referenzwerkzeug (3; 13) das mittlere der drei Einzelwerkzeuge (2, 3, 4; 12, 13, 14) ist.

3. Mehrteiliges Fräswerkzeug nach Anspruch 1 oder 2,
**dadurch gekennzeichnet, dass**
die zwei verschiebbaren Einzelwerkzeuge (2, 4; 12, 14) stufenlos verschiebbar sind.

4. Mehrteiliges Fräswerkzeug nach Anspruch 1 oder 2,
**dadurch gekennzeichnet, dass**
von den zwei verschiebbaren Einzelwerkzeugen (2, 4; 12, 14) entweder das eine (2; 12) oder das andere (4; 14) in Stufen verschiebbar ist.

5. Mehrteiliges Fräswerkzeug nach Anspruch 1 oder 2,
**dadurch gekennzeichnet, dass**
von den zwei verschiebbaren Einzelwerkzeugen (2, 4; 12, 14) das eine (2; 12) stufenlos und das andere (4; 14) in Stufen verschiebbar ist.

6. Mehrteiliges Fräswerkzeug nach einem oder mehreren der vorhergenannten Ansprüche,
**dadurch gekennzeichnet, dass**
die zwei verschiebbaren Einzelwerkzeuge (2, 12; 4; 14) jeweils mit einer im Fräswerkzeug gelagerten Verstellspindel (5, 6; 15, 16) gekoppelt sind, mit der sie jeweils unabhängig voneinander relativ zu dem Referenzwerkzeug (3; 13) axial auf der Spannbuchse (1, 11) verschiebbar sind.

7. Mehrteiliges Fräswerkzeug nach einem oder mehreren der vorhergenannten Ansprüche,
**dadurch gekennzeichnet, dass**
sich die Verstellspindeln (5, 6; 15, 16) jeweils durch das Referenzwerkzeug (3; 13) hindurch erstrecken.

8. Mehrteiliges Fräswerkzeug nach einem oder mehreren der vorhergenannten Ansprüche,
**dadurch gekennzeichnet, dass**
die Verstellspindeln (5, 6; 15, 16) jeweils von der Oberseite des oberen (2; 12) der drei Einzelwerkzeuge (2, 3, 4; 12, 13, 14) her verstellbar sind.

9. Mehrteiliges Fräswerkzeug nach einem oder mehreren der vorhergenannten Ansprüche,
**dadurch gekennzeichnet, dass**
in die Spannbuchse (1) ein Spannelement (20) integriert ist, welches die zwei verschiebbaren Einzelwerkzeuge (2, 4; 12, 14) reibschlüssig auf der Spannbüchse (1) fixiert.

10. Mehrteiliges Fräswerkzeug nach einem oder mehreren der vorhergenannten Ansprüche,
**dadurch gekennzeichnet,**
dieses ein integriertes Spannelement (20) aufweist, das die Spannbuchse (1; 11) auf einer Antriebswelle und die zwei anderen, verschiebbaren Einzelwerkzeuge (2, 4; 12, 14) reibschlüssig auf der Spannbuchse (1; 11) fixiert.

11. Mehrteiliges Fräswerkzeug nach einem oder mehreren der vorhergenannten Ansprüche,
**dadurch gekennzeichnet, dass**
mindestens zwei der drei Einzelwerkzeuge (2, 3, 4; 12, 13, 14) Werkzeugschneiden (2', 3', 4'; 12', 13', 14') aufweisen, die in einen am Umfang des jeweils benachbarten Einzelwerkzeugs vorgesehenen Zwischenraum zwischen benachbarten Werkzeugschneiden (2', 3', 4'; 12', 13', 14') des jeweils anderen dieser zwei Einzelwerkzeuge eingreifen, so dass sich die Wirkungsbereiche der Werkzeugschneiden (2', 3', 4'; 12', 13', 14') dieser mindestens zwei Einzelwerkzeuge in axialer und/oder radialer Richtung überlappen.

12. Mehrteiliges Fräswerkzeug nach einem oder mehreren der vorhergenannten Ansprüche,
**dadurch gekennzeichnet, dass**
das obere Einzelwerkzeug (2; 12) und das mittlere Referenzwerkzeug (3, 13) Schneidenbereiche (2', 3'; 12', 13') aufweisen, die sich überlappen.

13. Mehrteiliges Fräswerkzeug nach einem oder mehreren der vorhergenannten Ansprüche,
**dadurch gekennzeichnet, dass**
das untere Einzelwerkzeug (4; 14) und das mittlere Referenzwerkzeug (3, 13) Schneidenbereiche (3', 4'; 13', 14') aufweisen, die sich überlappen.

14. Mehrteiliges Fräswerkzeug nach einem oder mehreren der vorgenannten Ansprüche,
**dadurch gekennzeichnet, dass**
die Einzelwerkzeuge (2, 3, 4; 12, 13, 14) mit polykristallinen Schneiden (2', 3', 4'; 12', 13', 14') versehen sind.

15. Mehrteiliges Fräswerkzeug nach einem oder mehreren der vorgenannten Ansprüche,
**dadurch gekennzeichnet, dass**
die zwei verschiebbaren Einzelwerkzeuge (2, 4; 12, 14) jeweils mit einer lösbar am Fräswerkzeug angebrachten Verschiebungsweg-Kontrolleinrichtung (22) koppelbar sind.

16. Mehrteiliges Fräswerkzeug nach einem oder mehreren der vorgenannten Ansprüche,
**dadurch gekennzeichnet, dass**
eines der drei Einzelwerkzeuge (2, 3, 4; 12, 13, 14) ein Füge-Werkzeug (4; 14) ist.

17. Mehrteiliges Fräswerkzeug nach einem oder mehreren der vorhergenannten Ansprüche,
**dadurch gekennzeichnet, dass**
das Füge-Werkzeug (4; 14) das untere der drei Einzelwerkzeuge (2, 3, 4; 12, 13, 14) ist.

18. Mehrteiliges Fräswerkzeug nach einem oder mehreren der vorgenannten Ansprüche,
**dadurch gekennzeichnet, dass**
zwei der drei Einzelwerkzeuge (2, 3, 4; 12, 13, 14) als ein zweiteiliges Nut-Fräswerkzeug (2, 3)
oder
als ein zweiteiliges Feder-Fräserwerkzeug (12, 13) ausgebildet sind.

19. Mehrteiliges Fräswerkzeug nach einem oder mehreren der vorgenannten Ansprüche,
**dadurch gekennzeichnet, dass**
von dem zweiteiligen Nut-Fräswerkzeug (2, 3) ein bezogen auf ein erstes Nut-Fräswerkzeugteil (2) unteres zweites Nut-Fräswerkzeugteil (3)
oder
von dem zweiteiligen Feder-Fräswerkzeug (12, 13) ein bezogen auf ein erstes Feder-Fräswerkzeugteil (12) unteres zweites Feder-Fräswerkzeugteil (13)
das mittlere Referenzwerkzeug (3; 13) bildet.

20. Verfahren zum Fräsen von Werkstücken, insbesondere zur Herstellung von Nut und Feder, und zum Fügen der Stirnseite von plattenförmigen Werkstücken (7; 17) aus Holz und/oder Holzwerkstoffen, mittels eines Fräswerkzeugs nach Anspruch 1, das Verfahren umfassend folgende Schritte:
a) Positionieren des Fräswerkzeuges an dem zu bearbeitenden Werkstück (7; 17) derart, dass das Referenzwerkzeug (3; 13) in eine vorbestimmte Bearbeitungsposition gebracht wird, die eine Referenzposition für die verschiebbaren Einzelwerkzeuge (2, 4; 12, 14) darstellt,
b) Verschieben des ersten (2; 12) der verschiebbaren Einzelwerkzeuge (2, 4; 12, 14) relativ zu der durch das Referenzwerkzeug (3; 13) bestimmten Referenzposition in eine erste Anfangsposition zum Einstellen eines aus einem Zusammenwirken des Referenzwerkzeuges (3; 13) und des ersten verschiebbaren Einzelwerkzeuges (2; 12) resultierenden ersten Bearbeitungsmaßes (b1),
c) Verschieben des zweiten (4; 14) der verschiebbaren Einzelwerkzeuge (2, 4; 12, 14) relativ zu der durch das Referenzwerkzeug (3; 13) bestimmten Referenzposition in eine zweite Anfangsposition zum Einstellung eines zweiten Bearbeitungsmaßes (b2), und
d) gleichzeitiges Fräsen des Werkstückes (7; 17) mit allen drei Einzelwerkzeugen (2, 3, 4; 12, 13, 14).

21. Verfahren nach Anspruch 20,
**dadurch gekennzeichnet, dass**
das Referenzwerkzeug (3; 13) und das erste verschiebbare Einzelwerkzeug (2; 12) zum Profilieren des Werkstückes (7; 17) verwendet werden.

22. Verfahren nach Anspruch 21,
**dadurch gekennzeichnet, dass**
das erste verschiebbare Einzelwerkzeug (2; 12) zum Profilieren eines oberen Profilbereichs (8', 18') des Werkstückes (7; 17)
und
das Referenzwerkzeug (3; 13) zum Profilieren eines unteren (8', 18') oder mittleren Profilbereichs des Werkstückes (7; 17)
verwendet wird.

23. Verfahren nach einem oder mehreren der vorhergenannten Ansprüche 20 bis 22,
**dadurch gekennzeichnet, dass**
im Schritt c) das zweite (4; 14) der verschiebbaren Einzelwerkzeuge (2, 4; 12, 14) zum Einstellung eines aus einem Zusammenwirken des Referenzwerkzeuges (3; 13) und des zweiten verschiebbaren Einzelwerkzeuges (4; 14) resultierenden zweiten Bearbeitungsmaßes (b2) relativ zu der durch das Referenzwerkzeug (3; 13) bestimmten Referenzposition in die zweite Anfangsposition verschoben wird.

24. Verfahren nach einem oder mehreren der vorhergenannten Ansprüche 20 bis 23,
**gekennzeichnet durch**
e) Verwenden des zweiten verschiebbaren Einzelwerkzeugs (4; 14) zum Bearbeiten oder Fügen einer verschleißfesten Deckschicht (9; 19) des Werkstückes (7; 17),
f) Verschieben des zweiten verschiebbaren Einzelwerkzeuges (4; 14) von einer relativ zur Deckschicht (9; 19) und dem Referenzwerkzeug (3; 13) axial distanzierten Position her in die zweite Anfangsposition derart, dass das zweite Bearbeitungsmaß (b2) mindestens der Dicke der Deckschicht (9; 19) entspricht und ein oberer, radialer Schneidenabschnitt der Schneiden (4'; 14') des zweiten verschiebbaren Einzelwerkzeuges (4; 14) die Deckschicht (9; 19) zerspant, und
g) Verschieben des zweiten verschiebbaren Einzelwerkzeuges (4; 14) bei Erreichen eines vorbestimmten Verschleißes seines die Deckschicht (9; 19) zerspanenden Schneidenabschnitts um einen Betrag, welcher einer axialen Länge des verschlissenen Schneidenabschnitts oder mindestens der Dicke der Deckschicht (9; 19) entspricht, in axialer Richtung zu dem Referenzwerkzeug (3; 19) hin.

25. Verfahren nach Anspruch 24,
**gekennzeichnet durch**
Wiederholen des Schrittes g) bei Erreichen eines erneuten vorbestimmten Verschleißes bis ein maximaler Gesamtstandweg der Schneiden (4', 14') des zweiten verschiebbaren Einzelwerkzeuges (4; 14) erreicht ist.

26. Verfahren nach einem oder mehreren der vorhergenannten Ansprüche 20 bis 25,
**dadurch gekennzeichnet, dass**
die Werkstückbearbeitung stationär erfolgt.

27. Verfahren nach einem oder mehreren der vorhergenannten Ansprüche 20 bis 25,
**dadurch gekennzeichnet, dass**
die Werkstückbearbeitung im Durchlauf erfolgt.
